# FASCICULE DE BREVET EUROPEEN

(11) **EP 4 428 036 B1**
(45) Date de publication et mention de la délivrance du brevet: **29.07.2026**
(21) Numéro de dépôt: 24160973.4
(22) Date de dépôt: 01.03.2024
(51) Int. Cl.: B64D 11/00, B64D 11/04

(54) **MEUBLE D'OFFICE POUR AÉRONEF COMPORTANT UN SYSTÈME DE BLOCAGE DE CHARIOTS**
FLUGZEUGBORDKÜCHENMÖBEL MIT EINEM WAGENBLOCKIERSYSTEM
AIRCRAFT GALLEY FURNITURE WITH CART LOCKING SYSTEM

(30) Priorité: 06.03.2023 FR 2302048
(43) Date de publication de la demande: 11.09.2024
(73) Titulaire: Airbus (S.A.S.), 31700 Blagnac (FR)
(72) Inventeur: BOLLIN, Thomas, Blagnac (FR)
(74) Mandataire: Airbus-OPS SAS

(56) Documents cités:
- US-A1- 2018 016 011
- US-A1- 2019 031 348
- US-A1- 2021 047 042
- US-A1- 2022 127 001

## Description

### DOMAINE TECHNIQUE

La présente invention concerne un meuble d'office pour un aéronef, où ledit meuble d'office est prévu pour recevoir deux chariots et comporte un système de blocage pour bloquer l'un des chariots lorsque l'autre est absent. La présente invention concerne également un aéronef comportant au moins un tel meuble d'office.

### ÉTAT DE LA TECHNIQUE ANTÉRIEURE

Un aéronef comporte classiquement au moins un meuble d'office qui comporte différents composants permettant entre autres, aux membres de l'équipage de préparer les plateaux repas pour les passagers. Chaque plateau repas est classiquement rangé dans un chariot.

Pour ranger les chariots, le meuble d'office comporte un plateau sous lequel est aménagé un compartiment dans lequel deux chariots peuvent être glissés l'un à la suite de l'autre. Ainsi, les chariots n'encombrent pas les allées de l'aéronef. Le compartiment forme un logement dans l'espace duquel sont logés les chariots où le logement présente un accès et est équipé d'une porte permettant de clore ledit accès.

Le compartiment est dimensionné en profondeur pour permettre le logement de deux chariots qui ne sont pas de la même longueur. Il est ainsi prévu de mettre un chariot dit « long » et un chariot dit « court » qui présente une longueur plus courte approximativement divisée par deux par rapport au chariot long. Le chariot long est ainsi introduit le premier dans le compartiment sous le plateau et ensuite le chariot court est introduit dans le même compartiment qui est alors fermé par la porte. La profondeur du compartiment est déterminée pour que les deux chariots puissent y loger l'un contre l'autre avec la porte fermée et sans débattement sur la longueur. La profondeur est ainsi globalement égale à la somme des longueurs des chariots.

Il peut arriver qu'un seul chariot soit présent dans le compartiment. Il est alors nécessaire de le bloquer pour éviter qu'il se promène le long du compartiment. À cette fin, il est connu d'utiliser un séparateur qui est monté mobile en rotation sous le plateau autour d'un axe horizontal et parallèle à la profondeur du compartiment. Ce séparateur est mobile entre une position escamotée dans laquelle il est disposé horizontalement au-dessus des chariots et une position de blocage dans laquelle il s'étend verticalement dans le compartiment. Ce séparateur est déplaçable grâce à une poignée disposée au-dessus de la porte du compartiment.

Sur la profondeur du compartiment, le séparateur est disposé de manière à venir contre la paroi du chariot long lorsque ce dernier est seul dans le compartiment, par contre il ne peut pas être mis en place lorsque seul le chariot court est mis en place dans le compartiment car il butte sur le toit dudit chariot court, ou alors si le séparateur est mis en place, le chariot court dépasse alors au niveau de l'entrée du compartiment, empêchant la fermeture de la porte.

Il est donc nécessaire de trouver un arrangement différent qui maintient le chariot court lorsqu'il est seul.

US 2018/016011 A1 décrit un dispositif de retenue intermédiaire destiné à un meuble de cuisine d'avion, destiné à maintenir les chariots de cuisine à l'intérieur d'un compartiment à chariots. US 2022/127001 A1 décrit un système de retenue de chariots pour un compartiment pouvant accueillir plusieurs chariots.

### EXPOSÉ DE L'INVENTION

Un objet de la présente invention est de proposer un meuble d'office pour un aéronef, où le meuble d'office permet de loger deux chariots et présente un système de blocage comportant un séparateur dont la position est adaptable en fonction de la longueur des chariots.

À cet effet, est proposé un meuble d'office pour aéronef, ledit meuble d'office comportant :
- un plateau,
- sous le plateau, un compartiment présentant un cadre dormant et une paroi de fond, et destiné à recevoir deux chariots par introduction par le cadre dormant selon une direction d'introduction,
- une porte montée articulée au niveau du cadre dormant entre, alternativement, une position ouverte et une position fermée, et
- un système de blocage qui comporte :
   - une tige montée mobile en rotation autour d'un axe de rotation parallèle à la direction d'introduction,
   - une poignée solidaire de la tige et agencée pour déplacer la tige en rotation,
   - un coulisseau monté libre en translation sur la tige et bloqué en rotation par rapport à la tige, et
   - un séparateur solidaire du coulisseau et agencé pour prendre alternativement une position escamotée dans laquelle il est destiné à être relevé au-dessus des chariots et une position de blocage dans laquelle il est destiné à s'étendre verticalement en contact avec une paroi d'un des chariots, un libre déplacement du coulisseau et donc du séparateur permettant ainsi de bloquer, en position blocage, un seul chariot présent dans le compartiment quelle que soit la longueur dudit chariot.

Avec un tel arrangement, la position du séparateur peut être modulée en fonction de la longueur des chariots.

Avantageusement, la tige est portée par deux excroissances qui font saillie vers le bas par rapport au plateau.

Avantageusement, le système de blocage comporte deux moyens d'arrêt qui sont fixés sur la tige et disposés de part et d'autre du coulisseau.

Avantageusement, un premier moyen d'arrêt est disposé entre le coulisseau et le cadre dormant pour bloquer le coulisseau en translation dans la direction du cadre dormant.

Avantageusement, un deuxième moyen d'arrêt est disposé entre le coulisseau et la paroi de fond pour bloquer le coulisseau en translation dans la direction de la paroi de fond.

Avantageusement, le système de blocage comporte un élément de rappel qui est disposé de manière à repousser le coulisseau contre le premier moyen d'arrêt lorsqu'il en est écarté.

Avantageusement, l'élément de rappel est un ressort de compression disposé entre le coulisseau et le deuxième moyen d'arrêt.

Avantageusement, chaque moyen d'arrêt est un anneau emmanché serré sur la tige. L'invention propose également un aéronef comportant un fuselage dans lequel est installé au moins un meuble d'office selon l'une des variantes précédentes et un chariot long et un chariot court.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef selon l'invention,
[Fig. 2] est une vue de côté d'un meuble d'office selon l'invention,
[Fig. 3] est un agrandissement d'un système de blocage mis en œuvre dans le meuble d'office selon l'invention, dans une première position d'utilisation,
[Fig. 4] est un agrandissement du système de blocage mis en œuvre dans le meuble d'office selon l'invention, dans une deuxième position d'utilisation, et
[Fig. 5] est une vue en coupe du système de blocage selon la ligne V-V de la Fig. 4.

### EXPOSÉ DÉTAILLE DE MODES DE RÉALISATION

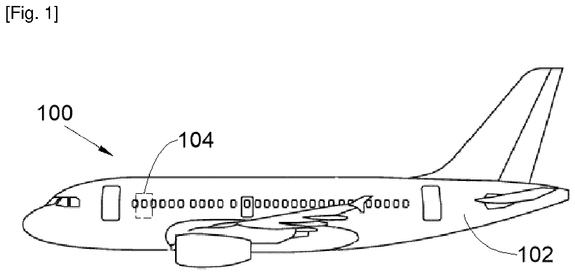

La Fig. 1 montre un aéronef 100 qui comporte un fuselage 102 à l'intérieur duquel est logé au moins un meuble d'office 104 (« galley » en terminologie anglosaxonne) selon l'invention. Dans le mode de réalisation de l'invention proposé à la Fig. 1, il y a un seul meuble d'office 104 à l'avant du fuselage 102 qui comporte un plancher 50, mais il peut y en avoir plusieurs répartis sur la longueur du fuselage 102.

Dans la suite de la description, le terme « horizontal » et le terme « vertical » sont définis par rapport à un aéronef 100 qui est au sol, c'est-à-dire que le plancher 50 est horizontal.

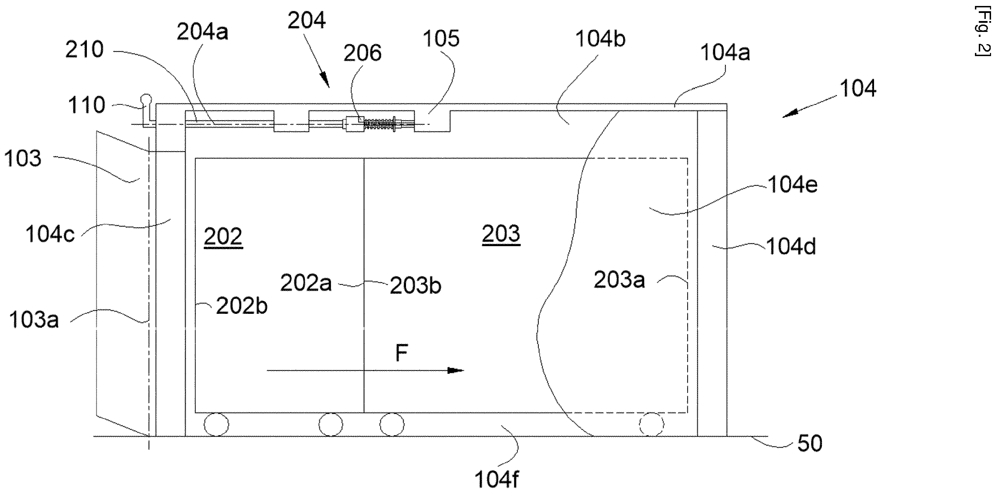

La Fig. 2 montre le meuble d'office 104 qui repose sur le plancher 50 du fuselage 102 et qui comporte un plateau 104a horizontal au-dessus du plancher 50 et sous lequel est aménagé un compartiment 104b qui permet de loger deux chariots 202 et 203 montés sur roulettes, à savoir un chariot long 203 et un chariot court 202 qui présente une longueur plus petite que celle du chariot long 203. Dans la forme illustrée, le chariot court 202 présente une longueur divisée par deux par rapport à la longueur du chariot long 203.

Le compartiment 104b prend la forme d'un logement dans l'espace duquel sont logés les chariots 202 et 203.

L'une des extrémités du compartiment 104b est ouverte et forme un cadre dormant 104c pour une porte 103 et l'autre extrémité du compartiment 104b est fermée et constitue la paroi de fond 104d du compartiment 104b. Le cadre dormant 104c permet l'introduction des chariots 203 et 203 dans le compartiment 104b, l'un derrière l'autre et dans le sens de leur longueur. Le plan vertical dans lequel cadre dormant 104c est inscrit et la paroi de fond 104d sont parallèles.

Le meuble d'office 104 présente également la porte 103 qui est montée articulée au niveau du cadre dormant 104c et qui peut prendre alternativement une position ouverte dans laquelle les chariots 202 et 203 peuvent passer à travers le cadre dormant 104c pour être introduits à l'intérieur du compartiment 104b et une position fermée dans laquelle les chariots 202 et 203 ne peuvent pas passer. La porte 103 est montée mobile autour d'un axe de charnière 103a vertical, c'est-à-dire perpendiculaire au plancher 50.

La direction d'introduction des chariots 202 et 203 dans le compartiment 104b est horizontale, c'est-à-dire parallèle au plancher 50 et perpendiculaire à la paroi de fond 104d et est représentée par la flèche F. La direction de retrait est bien sûr orientée dans la direction inverse à la flèche F. La profondeur du compartiment 104b parallèlement à la direction d'introduction F est telle qu'elle permet l'introduction du chariot long 203 et du chariot court 203 et permet la fermeture de la porte 103 en assurant un débattement minimal des chariots 202 et 203 dans le compartiment 104b. La profondeur du compartiment 104b est ainsi globalement égale à la somme des longueurs des chariots 202 et 203.

Le compartiment 104b est ainsi délimité, au-dessus du plancher 50, par le plateau 104a, par le cadre dormant 104c et la paroi de fond 104d et par deux parois latérales 104e-f parallèles qui s'étendent verticalement, c'est-à-dire perpendiculairement au plancher 50, entre le cadre dormant 104c et la paroi de fond 104d. La paroi référencée 104e est représentée en vue partiellement découpée et la paroi référencée 104f est la paroi se trouvant derrière les chariots 202 et 203 sur la Fig. 2. Chaque chariot 202, 203 présente une paroi frontale 202a, 203a qui est la paroi qui rentre la première dans le compartiment 104b et une paroi arrière 202b, 203b qui est la paroi qui sort la première dans le compartiment 104b.

Ainsi, lorsque le chariot long 203 est introduit le premier par le cadre dormant 104c, sa paroi frontale 203a vient contre la paroi de fond 104d, puis lorsque le chariot court 202 est introduit le deuxième par le cadre dormant 104c, sa paroi frontale 202a vient contre la paroi arrière 203b du chariot long 203 et sa paroi arrière 202b se retrouve contre la porte 103 lorsqu'elle est fermée. Les deux chariots 202 et 203 se trouvent ainsi sécurisés dans le compartiment 104b.

Le meuble d'office 104 comporte un système de blocage 204 qui est monté sous le plateau 104a, dans le compartiment 104b.

Le système de blocage 204 comporte une tige 210 montée mobile en rotation autour d'un axe de rotation 204a parallèle à la direction d'introduction F. La tige 210 est portée ici par deux excroissances 105 faisant saillie vers le bas, c'est-à-dire vers le plancher 50, par rapport au plateau 104a et solidaires de celui-ci. La tige 210 traverse ainsi chaque excroissance 105 au niveau d'un alésage que chaque excroissance 105 présente à cet effet.

Le système de blocage 204 comporte une poignée 110 solidaire de la tige 210 et qui est accessible depuis l'extérieur du compartiment 104b, ici au-dessus du cadre dormant 104c. La poignée peut ainsi être manœuvrée de manière à déplacer la tige 210 en rotation autour de l'axe de rotation 204a.

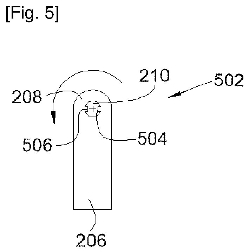

Le système de blocage 204 comporte un coulisseau 208 monté libre en translation sur la tige 210. Le coulisseau 208 est ici arrangé entre les deux excroissances 105. Le coulisseau 208 est également bloqué en rotation par rapport à la tige 210. Ainsi, toute rotation de la tige 210 entraîne la même rotation du coulisseau 208. Le coulisseau 208 et la tige 210 sont ainsi liés par une liaison uniquement glissière. Dans le mode de réalisation de l'invention présenté à la Fig. 5, le blocage en rotation du coulisseau 208 est assuré par au moins une rainure 504 qui est réalisée dans la tige 210 parallèlement à la direction d'introduction F et, pour chaque rainure 504, un ergot 506 solidaire du coulisseau 208 et où ledit ergot 506 s'insère dans ladite rainure 504.

Le système de blocage 204 comporte également un séparateur 206 qui est solidaire du coulisseau 208. Lorsque la tige 210 est déplacée en rotation par la poignée 110, le coulisseau 208 suit le même mouvement ainsi que le séparateur 206 qui peut ainsi prendre alternativement une position escamotée dans laquelle il est relevé au-dessus des chariots 202 et 203 et une position de blocage dans laquelle il s'étend verticalement vers le bas pour pouvoir venir en contact avec une paroi de l'un des chariots 202, 203 comme cela est expliqué ci-dessous.

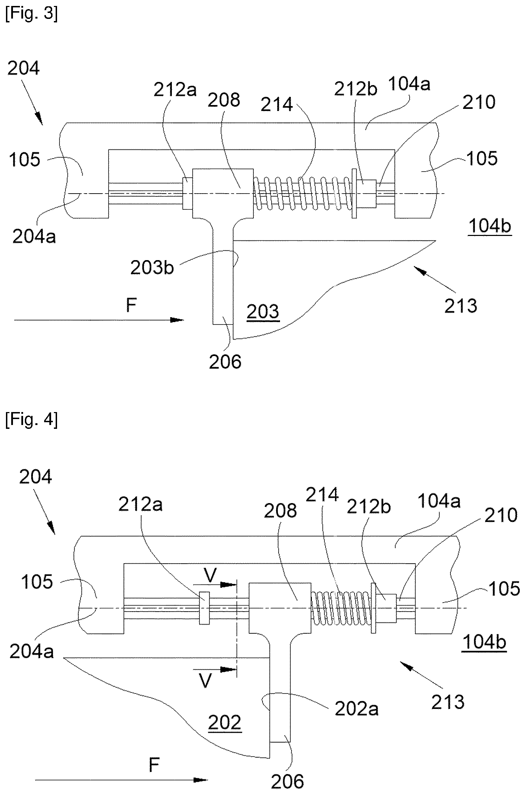

La Fig. 2 montre le séparateur 206 en position escamotée et les Figs. 3 et 4 montrent le séparateur 206 en position de blocage. La rotation du séparateur 206 matérialisée par la flèche de la Fig. 5 pour passer de la position escamotée à la position de blocage peut être réalisée dans l'autre sens selon l'implantation des différents éléments constituant le meuble d'office 104.

Le libre déplacement en translation du coulisseau 208 et donc du séparateur 206 permet ainsi de bloquer le seul chariot 202, 203 présent dans le compartiment 104b quelle que soit la longueur dudit chariot 202, 203. La translation possible du séparateur 206 permet d'adapter sa position à la longueur du seul chariot 202, 203 présent.

La Fig. 3 montre le meuble d'office 104 avec uniquement le chariot long 203 vu partiellement et la Fig. 4 montre le meuble d'office 104 avec uniquement le chariot court 202 vu partiellement. Comme on peut le remarquer sur ces deux figures, le coulisseau 208 et donc le séparateur 206 se sont déplacés parallèlement à la direction d'introduction F pour venir en contact avec, respectivement, la face avant 202a du chariot court 202, lorsqu'il est seul, ou la face arrière 203b du chariot long 203, lorsqu'il est seul.

Ainsi, dans une première position (Fig. 3), le séparateur 206 est positionné pour venir en appui contre la face arrière 203b du chariot long 203, ainsi, le chariot long 203 est contraint entre la paroi de fond 104d et le séparateur 206. Dans une deuxième position (Fig. 4), le séparateur 206 s'est déplacé et est positionné pour venir en appui contre la face avant 202a du chariot court 202, ainsi, le chariot court 202 est contraint entre le séparateur 206 et la porte 103. Chaque chariot 202, 203 est donc maintenu en position.

Dans le mode de réalisation de l'invention présenté ici, le coulisseau 208 est limité dans ses déplacements en translation entre deux positions extrêmes qui prennent en compte les différentes longueurs possibles pour les chariots 202 et 203 et sont les positions au-delà desquelles le coulisseau 208 ne peut pas aller. Dans le mode de réalisation de l'invention présenté sur les Figs. 3 et 4, les positions extrêmes pourraient être définies par les parois intérieures des excroissances 105 faisant face au séparateur 206 et formant butée.

Dans le mode de réalisation de l'invention présenté sur les Figs. 3 et 4, le système de blocage 204 présente deux moyens d'arrêt 212a-b qui sont fixés sur la tige 210 et disposés de part et d'autre du coulisseau 208 pour limiter le déplacement du coulisseau 208 en-deçà des positions extrêmes qui sont alors déterminées par les deux moyens d'arrêt 212a-b. Le premier moyen d'arrêt 212a est ainsi disposé entre le coulisseau 208 et le cadre dormant 104c pour bloquer le coulisseau en translation dans la direction du cadre dormant 104c, et le deuxième moyen d'arrêt 212b est ainsi disposé entre le coulisseau 208 et la paroi de fond 104d pour bloquer le coulisseau en translation dans la direction de la paroi de fond 104d.

Chaque moyen d'arrêt 212a-b prend ici la forme d'un anneau 212a-b qui est emmanché serré sur la tige 210. L'ajustement entre l'anneau 212 et la tige 210 est tel que le déplacement de l'anneau 212 nécessite une force supérieure à la pression que peut exercer le coulisseau 208 en particulier lorsqu'un élément de rappel est utilisé comme décrit ci-dessous.

La position du premier moyen d'arrêt 212a qui est du côté du cadre dormant 104c est déterminée de manière à ce que lorsque le coulisseau 208 est bloqué par ledit premier moyen d'arrêt 212a, il est dans une position correspondant à la longueur maximale que peut prendre le chariot long 203 et, par rapport à ce premier moyen d'arrêt 212a, le coulisseau 208 peut être déplacé uniquement du côté opposé, c'est-à-dire vers la paroi de fond 104d du compartiment 104b.

La position du deuxième moyen d'arrêt 212b qui est du côté de la paroi de fond 104d est déterminée de manière à ce que lorsque le coulisseau 208 est bloqué par ledit deuxième moyen d'arrêt 212b, il est dans une position correspondant à la longueur maximale que peut prendre le chariot court 202 et, par rapport à ce deuxième moyen d'arrêt 212b, le coulisseau 208 peut être déplacé uniquement du côté opposé, c'est-à-dire vers le cadre dormant 104c.

Ainsi, en fonction du type de chariot 202, 203 mis dans le compartiment 104b, les positions du coulisseau 208 et donc du séparateur 206 peuvent être ajustées pour venir contre la paroi frontale 202a du chariot court 202 ou la paroi arrière 203b du chariot long 203.

Dans le mode de réalisation de l'invention présenté sur les Figs. 3 et 4, le système de blocage 204 comporte également un élément de rappel 213, ici un ressort de compression 214, qui est disposé entre le coulisseau 208 et le deuxième moyen d'arrêt 212b. La position extrême correspondant au deuxième moyen d'arrêt 212b qui est atteinte par le coulisseau 208 correspond ici à la position atteinte lorsque le ressort de compression 214 est comprimé par le coulisseau 208 sous l'effet du chariot court 202.

Le ressort de compression 214 repousse le coulisseau 208 contre le premier moyen d'arrêt 212a lorsque ledit coulisseau 208 est écarté dudit premier moyen d'arrêt 212a. Le ressort de compression 214 est ici emmanché sur la tige 210.

En cas de besoin, il peut être nécessaire de relever le séparateur 206. À cette fin, le système de blocage 204 comporte la poignée 110 solidaire de la tige 210 qui est montée mobile en rotation autour de son axe et où la poignée permet de faire pivoter la tige 210 autour de son axe.

Ainsi, la rotation de la poignée 110 va faire pivoter la tige 210 et par voie de conséquence, le séparateur 206 qui va se relever au-dessus des chariots.

## Revendications

1. Meuble d'office (104) pour aéronef (100), ledit meuble d'office (104) comportant :
- un plateau (104a),
- sous le plateau (104a), un compartiment (104b) présentant un cadre dormant (104c) et une paroi de fond (104d), et destiné à recevoir deux chariots (202, 203) par introduction par le cadre dormant (104c) selon une direction d'introduction (F),
- une porte (103) montée articulée au niveau du cadre dormant (104c) entre, alternativement, une position ouverte et une position fermée, et
- un système de blocage (204) qui comporte :
- une tige (210) montée mobile en rotation autour d'un axe de rotation (204a) parallèle à la direction d'introduction (F),
- une poignée (110) solidaire de la tige (210) et agencée pour déplacer la tige (210) en rotation,
- un coulisseau (208) monté libre en translation sur la tige (210) et bloqué en rotation par rapport à la tige (210), et
- un séparateur (206) solidaire du coulisseau (208) et agencé pour prendre alternativement une position escamotée dans laquelle il est destiné à être relevé au-dessus des chariots (202, 203) et une position de blocage dans laquelle il est destiné à s'étendre verticalement en contact avec une paroi d'un des chariots (202, 203), **caractérisé en ce qu'**un libre déplacement du coulisseau (208) et donc du séparateur (206) permettant ainsi de bloquer , en position de blocage, un seul chariot (202, 203) présent dans le compartiment (104b) quelle que soit la longueur dudit chariot (202, 203).

2. Meuble d'office (104) selon la revendication 1, **caractérisé en ce que** la tige (210) est portée par deux excroissances (105) qui font saillie vers le bas par rapport au plateau (104a).

3. Meuble d'office (104) selon l'une des revendications 1 ou 2, **caractérisé en ce que** le système de blocage (204) comporte deux moyens d'arrêt (212a-b) qui sont fixés sur la tige (210) et disposés de part et d'autre du coulisseau (208).

4. Meuble d'office (104) selon la revendication 3, **caractérisé en ce qu'**un premier moyen d'arrêt (212a) est disposé entre le coulisseau (208) et le cadre dormant (104c) pour bloquer le coulisseau en translation dans la direction du cadre dormant (104c).

5. Meuble d'office (104) selon l'une des revendications 3 ou 4, **caractérisé en ce qu'**un deuxième moyen d'arrêt (212b) est disposé entre le coulisseau (208) et la paroi de fond (104d) pour bloquer le coulisseau en translation dans la direction de la paroi de fond (104d).

6. Meuble d'office (104) selon les revendications 4 et 5, **caractérisé en ce que** le système de blocage (204) comporte un élément de rappel (213) qui est disposé de manière à repousser le coulisseau (208) contre le premier moyen d'arrêt (212a) lorsqu'il en est écarté.

7. Meuble d'office (104) selon la revendication 6, **caractérisé en ce que** l'élément de rappel (213) est un ressort de compression (214) disposé entre le coulisseau (208) et le deuxième moyen d'arrêt (212b).

8. Meuble d'office (104) selon l'une des revendications 3 à 7, **caractérisé en ce que** chaque moyen d'arrêt (212a-b) est un anneau emmanché serré sur la tige (210).

9. Aéronef (100) comportant un fuselage (102) dans lequel est installé au moins un meuble d'office (104) selon l'une des revendications précédentes et un chariot long (203) et un chariot court (202).

## Patentansprüche

1. Bordküchenmöbel (104) für ein Flugzeug (100), das Bordküchenmöbel (104) umfassend:
- eine Platte (104a),
- unter der Platte (104a) ein Fach (104b), das einen Zargenrahmen (104c) und eine Bodenwand (104d) aufweist und dazu bestimmt ist, zwei Wagen (202, 203) durch Einführen durch den Zargenrahmen (104c) entlang einer Einführrichtung (F) aufzunehmen,
- eine Tür (103), die an dem Zargenrahmen (104c) zwischen abwechselnd einer geöffneten Stellung und einer geschlossenen Stellung gelenkig gelagert ist, und
- ein Blockiersystem (204), das umfasst:
- eine Stange (210), die um eine zu der Einführrichtung (F) parallele Drehachse (204a) drehbeweglich gelagert ist,
- einen Griff (110), der mit der Stange (210) einstückig ist und dazu eingerichtet ist, die Stange (210) drehend zu verlagern,
- einen Schieber (208), der auf der Stange (210) verschiebbar gelagert ist und in Bezug auf die Stange (210) drehblockiert ist, und
- einen Separator (206), der mit dem Schieber (208) einstückig ist und dazu eingerichtet ist, abwechselnd eine zurückgezogene Stellung einzunehmen, in der er dazu bestimmt ist, über die Wagen (202, 203) angehoben zu werden, und eine Blockierstellung, in der dazu bestimmt ist, sich vertikal in Kontakt mit einer Wand eines der Wagen (202, 203) zu erstrecken, **dadurch gekennzeichnet, dass** eine freie Verlagerung des Schiebers (208) und damit des Separators (206) es somit ermöglicht, in der Blockierstellung einen einzigen Wagen (202, 203), der sich in dem Fach (104b) befindet, unabhängig von der Länge des Wagens (202, 203) zu blockieren.

2. Bordküchenmöbel (104) nach Anspruch 1, **dadurch gekennzeichnet, dass** die Stange (210) von zwei Vorsprüngen (105) getragen wird, die in Bezug auf die Platte (104a) nach unten abstehen.

3. Bordküchenmöbel (104) nach einem der Ansprüche 1 oder 2, **dadurch gekennzeichnet, dass** das Blockiersystem (204) zwei Arretierungsmittel (212a-b) umfasst, die an der Stange (210) befestigt sind und beidseits des Schiebers (208) angeordnet sind.

4. Bordküchenmöbel (104) nach Anspruch 3, **dadurch gekennzeichnet, dass** ein erstes Arretierungsmittel (212a) zwischen dem Schieber (208) und dem Zargenrahmen (104c) angeordnet ist, um den Schieber gegen Verschieben in Richtung des Zargenrahmens (104c) zu blockieren.

5. Bordküchenmöbel (104) nach einem der Ansprüche 3 oder 4, **dadurch gekennzeichnet, dass** ein zweites Arretierungsmittel (212b) zwischen dem Schieber (208) und der Bodenwand (104d) angeordnet ist, um den Schieber gegen Verschieben in Richtung der Bodenwand (104d) zu blockieren.

6. Bordküchenmöbel (104) nach den Ansprüchen 4 und 5, **dadurch gekennzeichnet, dass** das Blockiersystem (204) ein Rückstellelement (213) umfasst, das so angeordnet ist, dass es den Schieber (208) gegen das erste Verriegelungsmittel (212a) zurückdrückt, wenn es davon beabstandet ist.

7. Bordküchenmöbel (104) nach Anspruch 6, **dadurch gekennzeichnet, dass** das Rückstellelement (213) eine Druckfeder (214) ist, die zwischen dem Schieber (208) und dem zweiten Arretierungsmittel (212b) angeordnet ist.

8. Bordküchenmöbel (104) nach einem der Ansprüche 3 bis 7, **dadurch gekennzeichnet, dass** jedes Arretierungsmittel (212a-b) ein Ring ist, der auf die Stange (210) gepresst ist.

9. Luftfahrzeug (100), das einen Rumpf (102) umfasst, in den mindestens ein Bordküchenmöbel (104) nach einem der vorhergehenden Ansprüche und ein langer Wagen (203) und ein kurzer Wagen (202) eingebaut sind.

## Claims

1. Galley unit (104) for an aircraft (100), said galley unit (104) comprising:
- a panel (104a),
- under the panel (104a), a compartment (104b) which has a doorframe (104c) and an end wall (104d) and is intended to receive two trolleys (202, 203) by introduction through the doorframe (104c) along a direction of introduction (F),
- a door (103) which is hinged to the doorframe (104c) to move alternatively between an open position and a closed position, and
- a locking system (204), which comprises:
- a rod (210) which is mounted so that it can be rotated about an axis of rotation (204a) parallel to the direction of introduction (F),
- a handle (110) which is attached to the rod (210) and is designed to rotate the rod (210),
- a slider (208) which is mounted freely in translation on the rod (210) and is locked in rotation relative to the rod (210), and
- a separator (206) which is attached to the slider (208) and is designed to occupy alternatively a retracted position in which it is intended to be raised above the trolleys (202, 203), and a locking position in which it is intended to extend vertically in contact with a wall of one of the trolleys (202, 203), **characterized in that** the free movement of the slider (208), and therefore of the separator (206), thus makes it possible to lock, in the locking position, the only trolley (202, 203) present in the compartment (104b) regardless of the length of said trolley (202, 203).

2. Galley unit (104) according to Claim 1, **characterized in that** the rod (210) is supported by two extensions (105) which protrude downwards from the panel (104a).

3. Galley unit (104) according to one of Claims 1 and 2, **characterized in that** the locking system (204) comprises two stop means (212a-b), which are fixed on the rod (210) and are arranged on either side of the slider (208).

4. Galley unit (104) according to Claim 3, **characterized in that** a first stop means (212a) is arranged between the slider (208) and the doorframe (104c) in order to block the slider in translation in the direction of the doorframe (104c).

5. Galley unit (104) according to one of Claims 3 and 4, **characterized in that** a second stop means (212b) is arranged between the slider (208) and the end wall (104d) in order to block the slider in translation in the direction of the end wall (104d).

6. Galley unit (104) according to Claims 4 and 5, **characterized in that** the locking system (204) comprises a restoring element (213), which is arranged so as to press the slider (208) back against the first stop means (212a) when it is separated from the latter.

7. Galley unit (104) according to Claim 6, **characterized in that** the restoring element (213) is a compression spring (214) arranged between the slider (208) and the second stop means (212b).

8. Galley unit (104) according to one of Claims 3 to 7, **characterized in that** each stop means (212a-b) is a ring fitted tightly onto the rod (210).

9. Aircraft (100) comprising a fuselage (102) in which there are installed at least one galley unit (104) according to one of the preceding claims as well as a long trolley (203) and a short trolley (202).
